# EUROPÄISCHE PATENTANMELDUNG

(11) **EP 1 677 072 A1**
(43) Veröffentlichungstag der Anmeldung: **05.07.2006**
(21) Anmeldenummer: 04030661.5
(22) Anmeldetag: 23.12.2004
(51) Int. Cl.: G01B 21/04

(54) **Eindeutige und zwangfreie Prüfkörper**

(71) Anmelder: metronom AG, 55120 Mainz (DE)
(72) Erfinder: Nabs, David, 39288 Burg (DE)
(74) Vertreter: Grünecker, Kinkeldey, Stockmair & Schwanhäusser Anwaltssozietät

(57) **Zusammenfassung**

Die Erfindung betrifft einen Prüfkörper (insbesondere für Koordinatenmessgeräte), der Distanzelemente und Targets umfasst, wobei jedes Distanzelement den Abstand zwischen zwei daran angeordneten Targets vorgibt. Der Prüfkörper ist dadurch gekennzeichnet, dass die Anzahl D der Distanzelemente und die Anzahl T der Targets der Relation D= 3T - 6 genügen, und dass T ≥ 5 ist. Insbesondere wird der Prüfkörper ausgeführt als doppelter Tetraeder (D=9,T=5), Oktaeder (D=12,T=6), oder Ikosaeder (D=30,T=12). Dargestellt ist ein Oktaeder mit Distanzstäben 250 und kugelförmigen Targets 260. Zur thermischen Kompensation können Stübe aus CFK mit negativem Ausdehnungskoeffizienten verwendet werden.

## Beschreibung

### Gebiet der Erfindung

Die Erfindung betrifft einen Prüfkörper, der Distanzelemente und Targets umfasst, wobei jedes Distanzelement den Abstand zwischen zwei daran angeordneten Targets vorgibt.

### Stand der Technik

Für die Überwachung von Koordinatenmessgeräten und Fertigungsgeräten sind Messungen an Prüfkörpern erforderlich, welche die wesentlichsten Abweichungen des Messgerätes oder des Fertigungsgeräts erfassen. Solche Prüfkörper als mechanische Vergleichsnormale stellen eine wirtschaftliche Alternative gegenüber messenden Vergleichsnormalen, wie z.B. Interferometern dar. Obwohl die Messungen mit Interferometern zuverlässige Aussagen über die Präzision der geprüften Geräte liefern, ist ein solches Verfahren in der Praxis sehr zeitaufwendig, so dass die Überwachungsintervalle oftmals sehr lang, z.B. jährlich, gewählt werden. Moderne Bearbeitungsmaschinen und Industrieroboter arbeiten in engen Toleranzbereichen und weisen zum Teil ein Driftverhalten auf, so dass häufigere Überprüfungen notwendig sind. Mit mechanischen Prüfkörpern sind zusätzliche Prüfungen in kürzeren Zeitintervallen auch unter wirtschaftlichen Gesichtspunkten möglich.

Je nach Einsatzgebiet werden an die Prüfkörper verschiedene Anforderungen gestellt. Insbesondere sollen sie im Rahmen der Standardmessbedingungen, also bei einer Temperatur von -20°C bis +70°C und einer Luftfeuchtigkeit von 0% bis 100%, zuverlässige Messergebnisse sichern, um unter verschiedenen Umgebungsbedingungen einsetzbar zu sein. Sie können bei großen zu vermessenden Geräten im Bereich von einigen Metern bis über 10 Metern liegen. Ein Gesichtspunkt ist dabei die Flexibilität und die Mobilität des Prüfkörpers, weshalb ein großer Prüfkörper für den Transport bevorzugt zerlegbar sein und ein möglichst geringes Gewicht haben sollte, wobei jedoch die Genauigkeit der Messungen am Prüfkörper gewährleistet sein muss.

Ein mechanischer Prüfkörper wird in der DE 199 15 012 A1 beschrieben. Er besteht aus vier Antastformelementen und sechs Verbindungselementen die in Tetraederform zusammengesetzt werden, so dass sich die Antastformelemente and den Ecken des Tetraeders befinden. Jedes Verbindungselement befindet sich zwischen zwei Antastformelementen. Die Materialien dieses Prüfkörpers sind so gewählt, dass sich ein Längenausdehnungskoeffizient von Antastpunkt zu Antastpunkt ergibt, der im Wesentlichen gleich Null ist. Dieser Prüfkörper ist so konstruiert, dass die Verbindungselemente gleich lang sind und durch die spezielle Form des Tetraeders eine selbsttragende Struktur ergeben, welche die Antastformelemente in wohldefinierten Positionen hält.

Ein solcher Prüfkörper kann zerlegt werden, die Antastformelemente sind aus Stahl oder Glaskeramik und die Verbindungselemente sind aus leichtem Material, nämlich Carbon-Faser-Kunststoff (CFK) gefertigt, wodurch eine gute Transportierbarkeit gewährleistet ist. In einer Ausführungsform bestehen die lösbaren Verbindungen der Antastformelemente mit den Verbindungselementen aufgrund von Magnetkräften.

Die Antastung an die Antastformelemente erfolgt taktil, d.h. sie werden z.B. mit Messstiften durch direkte Berührung angetastet. Jedoch zählen zum Stand der Technik auch Elemente die durch Licht angemessen werden. Allgemein wird hier ein anmessbares Element eines Prüfkörpers Target genannt. Für Messungen mit taktilen Systemen werden z.B. Chrom- oder Edelstahlkugeln verwendet, und die Bestimmung des Kugelmittelpunktes erfolgt über eine Kugelvermessung mit mehrfacher Antastung der Kugel an verschiedenen Stellen. Auch sogenannte Reset-Targets können mit taktilen Systemen angemessen werden, wobei der Mittelpunkt der Kugel durch einen Konus eingearbeitet ist, in den eine kleinere Kugel mit definiertem Durchmesser eingebracht wird, so dass der Mittelpunkt des Targets direkt über eine einfache Punktmessung angetastet werden kann. Erfolgt die Antastung mit Licht, so kommen z.B. für Messungen mit photogrammetrischen und anderen optischen Systemen sogenannte Retro-Targets bzw. Theodolit-Targets zum Einsatz. Schließlich können auch Prismen für Messungen mit einem Laser Tracker als Target verwendet werden.

Bei diesem Prüfkörper in Form eines Tetraeders befindet sich zwischen jeweils zwei Targets, ein Verbindungselement. Es gibt demnach keinen redundanten zusätzlichen Abstand zwischen Targets, z.B. in Form einer Diagonalen, so dass ein eventuell fehlerhaft gefertigtes Target oder Verbindungselement nicht aus den Messungen der Abstände der Targets ermittelt werden kann.

Weitere bekannte Prüfkörper, die zwei bzw. drei Raumdimensionen erfassen, sind in Form einer Kugelplatte bzw. eines Kugelquaders ausgestaltet, wobei die Abstände der Kugeln untereinander fest vorgegeben sind. Diese Prüfkörper sind jedoch nicht zerlegbar und damit in der Handhabung nachteilig.

### Beschreibung der Erfindung

Angesichts der Nachteile des Stands der Technik, liegt der Erfindung das Problem zugrunde, einen Prüfkörper zur Verfügung zu stellen, der eindeutig bestimmt und dennoch zwangfrei ist, wodurch die Lage der Targets in dem Prüfkörper eindeutig definiert ist und wobei der Prüfkörper in sich spannungsfrei ist. Zudem soll es ermöglicht werden, neben den durch die Distanzelemente vorgegebenen Abstände weitere Targetabstände zu Vermessung zu Verfügung zu stellen.

Das zuvor genannte Problem wird gelöst durch einen erfindungsgemäßen Prüfkörper, der Distanzelemente und Targets umfasst, wobei jedes Distanzelement den Abstand zwischen zwei daran angeordneten Targets vorgibt, bei dem die Anzahl D der Distanzelemente und die Anzahl T der Targets der Relation D = 3T - 6 genügen und bei dem T ≥ 5 ist.

Ein derartiger Prüfkörper hat den Vorteil, dass die relative Lage der Targets untereinander und damit auch die Abstände zwischen je zwei Targets allein durch die Wahl der Distanzelemente definiert und vorgegeben ist. Die Bedingung, dass die Anzahl der Distanzelemente gleich der um sechs verminderten dreifachen Anzahl der Targets ist, hat zur Folge das die Zahl der Freiheitsgrade des durch die Distanzelemente aufgebauten dreidimensionalen Streckennetzes gleich Null ist. Dadurch ist das Streckennetz und somit auch der Prüfkörper bis auf Drehungen und Verschiebungen der gesamten Anordnung vollständig bestimmt und vorgegeben.

Es gibt somit einerseits genügend Abstandsbedingungen, um die Lage der Targets genau zu definieren. Relative Verschiebungen einzelner oder mehrerer Targets innerhalb der Anordnung sind somit nicht möglich, der Prüfkörper ist stabil. Andererseits gibt es auch nicht zu viele Abstandsbedingungen, was ansonsten die Lage der Targets überdefinieren würde. Bereits eine weitere Abstandsbedingung durch ein weiteres Distanzelement kann nämlich zu einer Verspannung bei der Herstellung oder beim Aufbau des Prüfkörpers führen, die z.B. aus Fertigungsschwankungen der Distanzelemente und der Targets herrühren kann.

Die genannte Relation lässt sich folgendermaßen veranschaulichen. Die räumliche Lage jedes Targets wird durch drei Koordinaten bestimmt, weshalb es zunächst 3T unbekannte Größen gibt. Durch die Anzahl D von Distanzelementen werden D Entfernungen festgelegt, wodurch sich dann ein Gleichungssystem mit nur noch 3T - D Unbekannten ergibt. Da zwar die relative Lage der Targets innerhalb des Prüfkörpers festgelegt sein soll, jedoch der Prüfkörper im Raum gedreht und verschoben werden kann ohne ihn an sich zu verändern, ist die absolute Lage nicht relevant. Dies wird als Rangdefekt des Streckennetzes bezeichnet. Drei Koordinaten für die Drehungen um drei räumliche Achsen sowie drei Koordinaten für die Verschiebung des Prüfkörpers entlang der drei Achsen müssen nicht festgelegt sein, weshalb insgesamt zusätzlich noch 6 Unbekannte zu subtrahieren sind. Auf diese Weise ergibt sich die Bedingung für einen allein durch die Anzahl und die Längen der Distanzelemente bestimmten Prüfkörper zu 3T - D - 6 = 0.

Als Beispiel eines Körpers, der diese Bedingung nicht erfüllt, sei hier ein Würfel (allgemeiner ein Polyeder mit sechs Vierecken als Seitenflächen) genannt. Weil ein Würfel der 8 Ecken und 12 Kanten hat, erfüllt er die zuvor genannte Bedingung nicht. Tatsächlich ist auch die relative Lage der Ecken allein durch die Vorgabe der Kantenzahl und deren Längen nicht festgelegt, da beispielsweise ein Verscherung des Würfels möglich ist.

Ein solcher Prüfkörper hat den weiteren Vorteil, dass es wenigstens einen zusätzlichen Abstand zwischen Targets gibt, der nicht durch ein Distanzelement vorgegeben wird, sondern der in Form wenigstens einer Diagonalen vorliegt und dieser Abstand sich allein durch die Gesamtanordnung definiert, die wie oben erläutert eindeutig ist. Dadurch liegt nach Ausmessung der Abstände zwischen je zwei Targets eine Überbestimmung vor, wodurch sich z.B. ermitteln lässt, ob ein Target schadhaft ist, und wenn ja welches.

Ein einfaches Beispiel für einen Prüfkörper dieser Art besteht darin, dass er T = 5 Targets umfasst, wodurch sich aus der Relation D = 3T - 6 sofort die Anzahl der Distanzelemente zu D = 9 ergibt. Sind im speziellen beispielsweise noch die durch die Distanzelemente vorgegebenen Abstände alle gleich groß und bestehen die Targets aus Kugeln und die Distanzelemente aus dazwischen befindlichen Stäben, so hat dieser Prüfkörper die Gestalt eines "Doppel-Tetraeders". Dieser entspricht einem einzelnen Tetraeder, der um eine Kugel und drei Stäbe erweitert wurde, indem auf einer Dreieckseite des einzelnen Tetraeders an jeder der drei Kugeln, die dieses Dreieck bilden, ein Ende von jeweils einem der zusätzlichen Stäbe angeordnet wird, und indem die eine zusätzliche Kugel an den dann noch freien Enden aller drei zusätzlichen Stäbe angeordnet wird.

Eine Weiterbildung des erfindungsgemäßen Prüfkörpers besteht darin, dass der Prüfkörper teilweise oder vollständig in die Distanzelemente und die Targets zerlegbar ist.

Dies hat den Vorteil, dass der Prüfkörper für den Transport zerlegt werden kann und zur Messung wieder zusammengesetzt werden kann.

Eine andere Weiterbildung des erfindungsgemäßen Prüfkörpers besteht darin, dass die durch die Distanzelemente vorgegebenen Abstände alle im wesentlichen gleich sind.

Auf diese Weise können Prüfkörper realisiert werden, die ein hohes Maß an Symmetrie aufweisen. Ein weiterer Vorteil besteht darin, dass gleichartige. Distanzelemente verwendet werden können, was die Herstellung und die Unterbringung für den Transport vereinfacht.

Eine andere Weiterbildung des erfindungsgemäßen Prüfkörpers besteht darin, dass der Prüfkörper die Form eines Oktaeders umfasst, in dem 12 den gleichen Targetabstand vorgebende Distanzelemente die Kanten des Oktaeders und 6 Targets die Ecken des Oktaeders bilden.

Diese Anordnung hat den Vorteil, dass eine einfache elementare Struktur in Form eines platonischen Körpers zur Verfügung gestellt werden kann, die stabil ist und aufgrund der gleichen Targetabstände leicht zusammenzusetzen ist. Weiterhin werden im Oktaeder drei Diagonalen definiert, so dass es drei Paare von Targets gibt deren Abstand nicht durch ein Distanzelement definiert wird, sondern sich allein aus der Gesamtstruktur des Prüfkörpers ergibt. Dadurch sind drei redundante Entfernungsmessungen möglich.

Eine andere Weiterbildung des erfindungsgemäßen Prüfkörpers besteht darin, dass der Prüfkörper die Form eines Ikosaeders umfasst, in dem 30 den gleichen Targetabstand vorgebende Distanzelemente die Kanten des Oktaeders und 12 Targets die Ecken des Ikosaeders bilden.

Diese Anordnung hat den Vorteil, dass durch sie eine weitere einfache elementare Struktur in Form eines platonischen Körpers zur Verfügung gestellt werden kann, die stabil ist und aufgrund der gleichen Targetabstände leicht zusammenzusetzen ist. Weiterhin werden im Ikosaeder 36 Diagonalen definiert, so dass es 36 Paare von Targets gibt, deren Abstand nicht durch ein Distanzelement definiert wird, sondern sich allein aus der Gesamtstruktur des Prüfkörpers ergibt. Dadurch sind 36 redundante Entfernungsmessungen möglich.

Eine andere Weiterbildung des erfindungsgemäßen Prüfkörpers besteht darin, dass am Prüfkörper eine Erweiterung angeordnet ist, indem an drei der Targets des Prüfkörpers je ein weiteres Distanzelement angeordnet ist und an dem jeweils noch freien Targetplatz der drei weiteren Distanzelemente insgesamt genau ein weiteres Target angeordnet ist, oder wobei mehrere derartige Erweiterungen am Prüfkörper angeordnet sind und/oder wobei der Prüfkörper aus einer beliebigen Kombination aus einem oder mehreren Tetradern und/oder einem oder mehreren Oktaedern und/oder einem oder mehreren Ikosaedern besteht.

Durch derartige Erweiterungen können aus den elementaren Strukturen des erfindungsgemäßen Prüfkörpers weitere stabile Prüfkörper entstehen. Eine solche Erweiterung kann erfolgen, indem z.B. auf eine dreieckige Außenseite einer elementaren Struktur mittels dreier zusätzlicher Distanzelemente und eines zusätzlichen Targets ein "Tetraeder aufgesetzt" wird. Andererseits können zum Aufsetzen auch Targets verwendet werden, die nicht oder nur teilweise durch Distanzelemente voneinander beabstandet sind. Ein so erweiterter Prüfkörper erfüllt notwendigerweise wieder die oben genannte Relation, weil sich T um 1 und D um 3 erhöht, so dass also weiterhin 3T - D - 6 = 0 gilt. Alternativ dazu können mehrere derartige Erweiterungen aufgesetzt werden. Zusätzlich oder alternativ kann der Prüfkörper aus einer beliebigen Kombination aus einem oder mehreren Tetradern und/oder einem oder mehreren Oktaedern und/oder einem oder mehreren Ikosaedern besteht, wobei gemeinsame Ecken bzw. gemeinsame Kanten durch je ein Target bzw. je ein Distanzelement besetzt sind.

Eine andere Weiterbildung des erfindungsgemäßen Prüfkörpers besteht darin, dass die Distanzelemente Stäbe umfassen, die zwischen den Targets angeordnet sind.

Dies hat den Vorteil, dass die Distanzelemente aus Stäben bestehen können, die in bekannter Weise herstellbar sind. Zudem sind solche Stäbe eine einfache Möglichkeit, die Distanz zwischen zwei Targets festzulegen.

Eine andere Weiterbildung des erfindungsgemäßen Prüfkörpers besteht darin, dass die Targets Kugeln umfassen.

Dies hat den Vorteil, dass das bei der Prüfung z.B. von Koordinatenmessgeräten häufig verwendete Verfahren der Antastung von Kugeln zur Bestimmung des Kugelmittelpunkts zum Einsatz kommen kann.

Eine andere Weiterbildung des erfindungsgemäßen Prüfkörpers besteht darin, dass wenigstens ein Target oder alle Targets durch magnetische Kräfte an den Distanzelementen gehalten werden.

Auf diese Weise können die Targets einfach an die Distanzelemente angeordnet werden. Dabei können z.B. die Distanzelemente Magnete umfassen, welche auf metallische Bestandteile der Targets wirken und diese an der vorgegebenen Position fixieren.

Eine andere Weiterbildung des erfindungsgemäßen Prüfkörpers besteht darin, dass die thermischen Längenänderungen jedes Distanzelements und der zwei daran angeordneten Targets sich unter Standardmessbedingungen im wesentlichen kompensieren, wodurch der Abstand der zwei Targets voneinander im wesentlichen konstant bleibt.

Dies hat den Vorteil, dass Änderungen der Umgebungsbedingungen, insbesondere der Temperatur, keinen Einfluss auf die zu messenden Abstände der Targets haben, sondern kompensiert werden können. Dabei werden bevorzugt Distanzelemente aus CFK-Material mit negativem thermischen Längenausdehnungskoeffizient und Targets mit positivem thermischen Längenausdehnungskoeffizient verwendet.

Eine andere Weiterbildung des erfindungsgemäßen Prüfkörpers besteht darin, dass jedes Distanzelement wenigstens ein kompensierendes Befestigungselement für jeweils ein Target umfasst, welches die thermischen Längenänderungen des Distanzelements und der zwei durch das Distanzelement beabstandeten Targets unter Standardmessbedingungen im wesentlichen kompensiert, wodurch der Abstand der zwei Targets voneinander im wesentlichen konstant bleibt.

Dies hat den Vorteil, dass Änderungen der Umgebungsbedingungen, insbesondere der Temperatur, keinen Einfluss auf die zu messenden Abstände der Targets haben, sondern durch die Befestigungselemente kompensiert werden können. Dabei können für die Distanzelemente und die Targets bevorzugt Materialien verwendet werden, die einen positiven thermischen Längenausdehnungskoeffizienten haben. Die Kompensation erfolgt durch das bzw. die Befestigungselemente, welche z.B. ihrerseits aus zwei oder mehr Teilen mit positivem thermischen Längenausdehnungskoeffizienten bestehen können, wobei die Kompensation beispielsweise durch ein entgegengesetztes gegeneinander Verschieben der sich ausdehnenden Teile realisiert sein kann.

Eine andere Weiterbildung des erfindungsgemäßen Prüfkörpers in den zwei zuvor genannten Weiterbildungen und wenn die Targets Kugeln umfassen, besteht darin, dass durch die Kompensation der Abstand der Kugelmittelpunkte im wesentlichen konstant bleibt.

Dies hat den Vorteil, dass der Abstand der Kugelmittelpunkte, die durch mehrfache Antastung der Kugeln ermittelbar sind, konstant gehalten werden kann. Dadurch ist es möglich, den Prüfkörper als für ein gebräuchliches Verfahren besonders geeignet herzustellen.

Die verschiedenen Weiterbildungen lassen sich unabhängig voneinander einsetzen oder geeignet miteinander kombinieren.

Weitere bevorzugte Ausführungsformen der Erfindung werden im Nachfolgenden unter Bezugnahme auf die Zeichnungen beschrieben.

### Kurzbeschreibung der Zeichnungen

Fig. 1a zeigt eine erste Ausführung eines erfindungsgemäßen Prüfkörpers in Form eines doppelten Tetraeders.
Fig. 1b zeigt eine Abwandlung der ersten Ausführungsform.
Fig. 2 zeigt eine zweite Ausführung eines erfindungsgemäßen Prüfkörpers in Form eines Oktaeders.
Fig. 3 zeigt eine dritte Ausführung eines erfindungsgemäßen Prüfkörpers in Form eines Ikosaeders.

### Beschreibung der Ausführungsformen

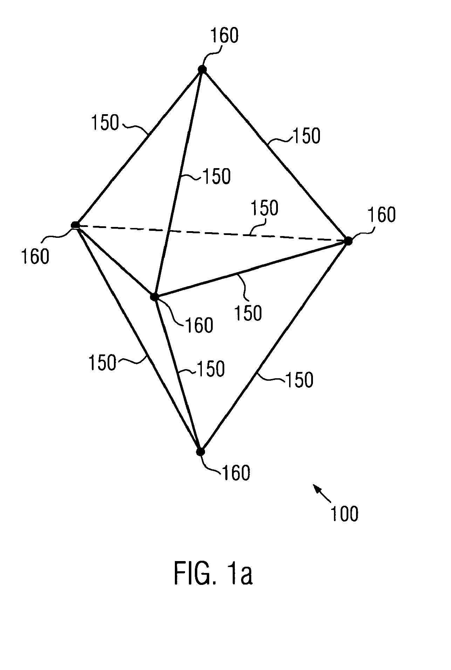

Fig. 1a zeigt einen erfindungsgemäßen Prüfkörper 100 in Form eines doppelten Tetraeders. Darin sind 5 Targets 160 und 9 Distanzelemente 150 zerlegbar zusammengesetzt. Der Distanzelemente 150 haben in dieser Ausführung die Form von gleich langen Stäben und die Targets 160 sind durch Kugeln realisiert. Das gestrichelt gezeichnete Distanzelement ist daher nicht verdeckt, sondern ist nur der Übersichtlichkeit wegen auf diese Weise dargestellt, um einen räumlichen Eindruck zu vermitteln. Die relative Lage der Kugeln ist durch die Stäbe vorgegeben. Nachdem der Prüfkörper zusammengesetzt ist, ist die relative Lage der Kugeln im Prüfkörper festgelegt. Es besteht kein Spielraum für Verschiebungen der Kugeln gegeneinander. Es existiert eine Diagonale von der oberen zur unteren Kugel, die nicht von einem Stab vorgegeben wird, sondern sich durch die Gesamtstruktur definiert. Diese kann in einer Messung als zusätzlicher Abstand vorteilhaft ausgenutzt werden.

Die Stäbe können an ihren beiden Enden zur Mitte hin vertieft, z.B. konisch ausgestaltet sein, so dass an jedem Ende eine Kugel angeordnet werden kann, die z.B. durch einen Magneten im Stabende zum Konus hin gezogen wird und auf diese Weise in ihrer Position am Stabende fixiert wird. Ein solcher Prüfkörper 100 lässt sich daher leicht aus den einzelnen Bestandteilen zusammensetzen und nach dem Gebrauch auch wieder zerlegen, um verpackt und transportiert zu werden.

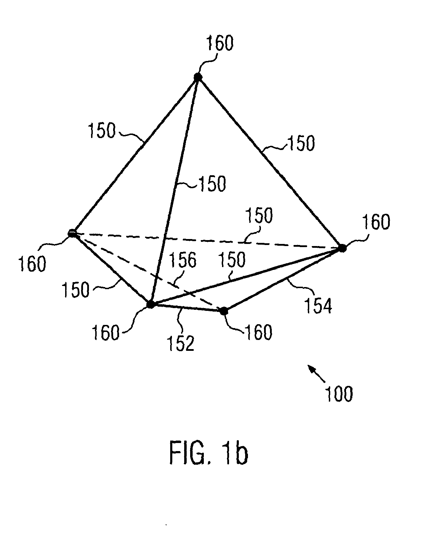

In Fig. 1 b zeigt eine Abwandlung der ersten Ausführungsform nach Fig. 1 a. Gleiche Bezugszeichen bezeichnen dabei gleiche Bestandteile und zur Vermeidung von Wiederholungen wird hier in der Beschreibung der Zeichnung nur auf die Unterschiede Bezug genommen. Der Unterschied zu Fig. 1a besteht hier darin, dass die Distanzelemente 152, 154 und 156 eine unterschiedliche Länge haben wodurch sich eine gegenüber Fig. 1a geänderte Lage des unteren Targets 160 in den beiden Prüfkörpern nach Fig. 1a bzw. Fig. 1 b ergibt.

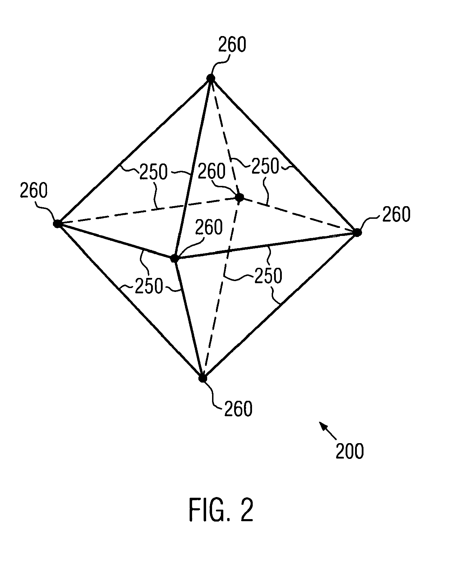

Fig. 2 zeigt einen Prüfkörper in Form eines Oktaeders 200. Dieser besteht aus 12 Distanzelementen 250 und 6 Targets 260. Ansonsten wird auf die Beschreibung der Figuren 1a und 1b verwiesen. Ähnliche Bezugszeichen bezeichnen dabei gleiche Bestandteile, wobei hier die Hunderterzahl um eins erhöht ist, und zur Vermeidung von Wiederholungen wird hier in der Beschreibung der Zeichnung nur auf die Unterschiede Bezug genommen. Im Oktaeder gibt es drei Diagonalen, die nicht mit Distanzelementen besetzt sind. Es stehen somit drei zusätzliche Abstände zur Verfügung, aus denen beispielsweise ein Target ermittelt werden kann, das von einer andersartigen der Dimensionierung ist. Auch in diesem Prüfkörper können ein oder mehrere Distanzelemente 250 abweichende Längen haben, wodurch sich die Lage von ein oder mehreren Targets 260 ändern kann. Dennoch ist der Prüfkörper auch dann noch stabil und spannungsfrei, er kann im strengen Sinne lediglich nicht mehr als Oktaeder bezeichnet werden

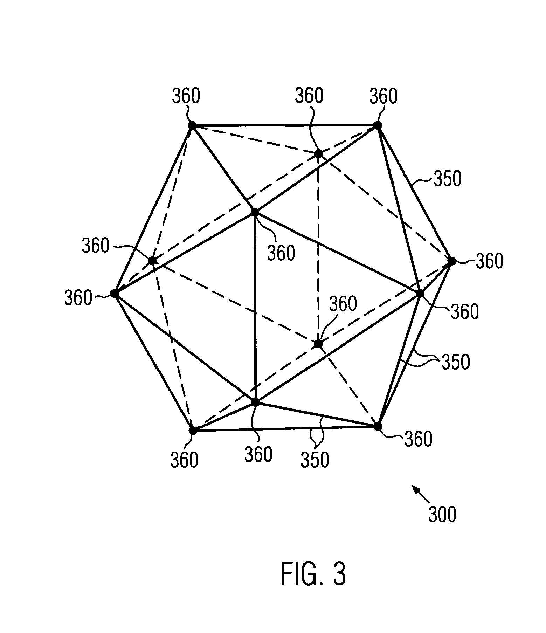

Fig.3 zeigt eine dritte Ausführung eines erfindungsgemäßen Prüfkörpers in Form eines Ikosaeders 300. Dieser besteht aus 30 Distanzelementen 350 und aus 12 Targets 360. Gegenüber Fig. 2 sind ähnliche Bezugszeichen verwendet worden, wobei hier die Hunderterzahl dem gegenüber um eins erhöht ist, und zur Vermeidung von Wiederholungen wird hier in der Beschreibung der Zeichnung nur auf die Unterschiede der zuvor beschriebenen Ausführungsformen Bezug genommen. Zusätzlich zu den durch die Distanzelemente 350 bestimmten Abstände der Targets 360 gibt es im Ikosaeder 300 weitere 36 Targetpaare, die im Sinne von Diagonalen bestehen, was somit 36 redundante Abstandsmessungen emöglicht.

## Patentansprüche

1. Prüfkörper (100; 200; 300), der Distanzelemente (150, 152, 154, 156; 250; 350) und Targets (160; 260; 360) umfasst, wobei jedes Distanzelement den Abstand zwischen zwei daran angeordneten Targets vorgibt,
**dadurch gekennzeichnet,**
**dass** die Anzahl D der Distanzelemente und die Anzahl T der Targets der Relation D = 3T - 6 genügen, und dass T ≥5 ist.

2. Prüfkörper nach Anspruch 1, wobei der Prüfkörper teilweise oder vollständig in die Distanzelemente und die Targets zerlegbar ist.

3. Prüfkörper nach Anspruch 1 oder 2, wobei die durch die Distanzelemente vorgegebenen Abstände alle im wesentlichen gleich sind.

4. Prüfkörper nach Anspruch 3, wobei der Prüfkörper die Form eines Oktaeders umfasst, in dem 12 Distanzelemente die Kanten des Oktaeders und 6 Targets die Ecken des Oktaeders bilden.

5. Prüfkörper nach Anspruch 3, wobei der Prüfkörper die Form eines Ikosaeders umfasst, in dem 30 Distanzelemente die Kanten des Oktaeders und 12 Targets die Ecken des Ikosaeders bilden.

6. Prüfkörper nach einem der vorhergehenden Ansprüche, wobei am Prüfkörper eine Erweiterung angeordnet ist, indem an drei der Targets des Prüfkörpers je ein weiteres Distanzelement angeordnet ist und an dem jeweils noch freien Targetplatz der drei weiteren Distanzelemente insgesamt genau ein weiteres Target angeordnet ist, oder wobei mehrere derartige Erweiterungen am Prüfkörper angeordnet sind und/oder wobei der Prüfkörper aus einer beliebigen Kombination aus einem oder mehreren Tetradern und/oder einem oder mehreren Oktaedern und/oder einem oder mehreren Ikosaedern besteht.

7. Prüfkörper nach einem der vorhergehenden Ansprüche, wobei die Distanzelemente Stäbe umfassen, die zwischen den Targets angeordnet sind.

8. Prüfkörper nach einem der vorhergehenden Ansprüche, wobei die Targets Kugeln umfassen.

9. Prüfkörper nach einem der vorhergehenden Ansprüche, wobei wenigstens ein Target oder alle Targets durch magnetische Kräfte an den Distanzelementen gehalten werden.

10. Prüfkörper nach einem der vorhergehenden Ansprüche, wobei die thermischen Längenänderungen jedes Distanzelements und der zwei daran angeordneten Targets sich unter Standardmessbedingungen im wesentlichen kompensieren, wodurch der Abstand der zwei Targets voneinander im wesentlichen konstant bleibt.

11. Prüfkörper nach einem der Ansprüche 1 bis 9, wobei jedes Distanzelement wenigstens ein kompensierendes Befestigungselement für jeweils ein Target umfasst, welches die thermischen Längenänderungen des Distanzelements und der zwei durch das Distanzelement beabstandeten Targets unter Standardmessbedingungen im wesentlichen kompensiert, wodurch der Abstand der zwei Targets voneinander im wesentlichen konstant bleibt.

12. Prüfkörper nach Anspruch 10 oder 11, in Kombination mit Anspruch 8, wobei durch die Kompensation der Abstand der Kugelmittelpunkte im wesentlichen konstant bleibt.

## Geänderte Patentansprüche

### Geänderte Patentansprüche gemäss Regel 86(2) EPÜ.

**1.** Prüfkörper (100; 200; 300), der Distanzelemente (150, 152, 154, 156; 250; 350) und Targets (160; 260; 360) umfasst, wobei jedes Distanzelement den Abstand zwischen zwei daran angeordneten Targets vorgibt,
**dadurch gekennzeichnet,**
**dass** die Anzahl D der Distanzelemente und die Anzahl T der Targets der Relation D = 3T - 6 genügen, und dass
(a) T = 6 ist, und der Prüfkörper die Form eines Oktaeders aufweist, in dem 12 Distanzelemente die Kanten des Oktaeders und 6 Targets die Ecken des Oktaeders bilden, oder
(b) T = 6 ist, und der Prüfkörper eine aus einem Oktaeder dadurch hervorgehende Form aufweist, dass ein oder mehrere Distanzelemente eine unterschiedliche Länge haben, oder
(c) T = 12 ist.

**2.** Prüfkörper nach Anspruch 1, wobei der Prüfkörper teilweise oder vollständig in die Distanzelemente und die Targets zerlegbar ist.

**3.** Prüfkörper nach Anspruch 1 oder 2, wobei in dem Fall T = 12 die durch die Distanzelemente vorgegebenen Abstände alle im wesentlichen gleich sind.

**4.** Prüfkörper nach Anspruch 3, wobei der Prüfkörper die Form eines Ikosaeders umfasst, in dem 30 Distanzelemente die Kanten des Ikosaeders und 12 Targets die Ecken des Ikosaeders bilden.

**5.** Prüfkörper nach einem der vorhergehenden Ansprüche, wobei am Prüfkörper eine Erweiterung angeordnet ist, indem an drei der Targets des Prüfkörpers je ein weiteres Distanzelement angeordnet ist und an dem jeweils noch freien Targetplatz der drei weiteren Distanzelemente insgesamt genau ein weiteres Target angeordnet ist, oder wobei mehrere derartige Erweiterungen am Prüfkörper angeordnet sind und/oder wobei der Prüfkörper aus einer beliebigen Kombination aus einem oder mehreren Tetradem und/oder einem oder mehreren Oktaedern und/oder einem oder mehreren Ikosaedern besteht.

**6.** Prüfkörper nach einem der vorhergehenden Ansprüche, wobei die Distanzelemente Stäbe umfassen, die zwischen den Targets angeordnet sind.

**7.** Prüfkörper nach einem der vorhergehenden Ansprüche, wobei die Targets Kugeln umfassen.

**8.** Prüfkörper nach einem der vorhergehenden Ansprüche, wobei wenigstens ein Target oder alle Targets durch magnetische Kräfte an den Distanzelementen gehalten werden.

**9.** Prüfkörper nach einem der vorhergehenden Ansprüche, wobei die thermischen Längenänderungen jedes Distanzelements und der zwei daran angeordneten Targets sich unter Standardmessbedingungen im wesentlichen kompensieren, wodurch der Abstand der zwei Targets voneinander im wesentlichen konstant bleibt.

**10.** Prüfkörper nach einem der Ansprüche 1 bis 8, wobei jedes Distanzelement wenigstens ein kompensierendes Befestigungselement für jeweils ein Target umfasst, welches die thermischen Längenänderungen des Distanzelements und der zwei durch das Distanzelement beabstandeten Targets unter Standardmessbedingungen im wesentlichen kompensiert, wodurch der Abstand der zwei Targets voneinander im wesentlichen konstant bleibt.

**11.** Prüfkörper nach Anspruch 9 oder 10, in Kombination mit Anspruch 7, wobei durch die Kompensation der Abstand der Kugelmittelpunkte im wesentlichen konstant bleibt.
